# EUROPEAN PATENT APPLICATION

(11) **EP 4 159 676 A1**
(43) Date of publication of application: **05.04.2023**
(21) Application number: 21814151.3
(22) Date of filing: 11.05.2021
(51) Int. Cl.: C01B 33/20, B28B 3/00

(54) **INORGANIC STRUCTURE AND METHOD FOR PRODUCING SAME**

(30) Priority: 27.05.2020 JP 2020092453
(71) Applicant: Panasonic Intellectual Property Management Co., Ltd., Osaka-shi, Osaka 540-6207 (JP)
(72) Inventor: SATO Natsuki, Chuo-ku, Osaka-shi, Osaka 540-6207 (JP); SAWA Ryosuke, Chuo-ku, Osaka-shi, Osaka 540-6207 (JP); YOSHIOKA Tatsuro, Chuo-ku, Osaka-shi, Osaka 540-6207 (JP); KURIZOE Naoki, Chuo-ku, Osaka-shi, Osaka 540-6207 (JP); SEKINO Tohru, Suita, Osaka 565-0871 (JP); GOTO Tomoyo, Suita, Osaka 565-0871 (JP); CHO Sunghun, Suita, Osaka 565-0871 (JP); SEO Yeongjun, Suita, Osaka 565-0871 (JP)
(74) Representative: Müller-Boré & Partner Patentanwälte PartG mbB
(86) International application number: PCT/JP2021/017819
(87) International publication number: WO 2021/241192

(57) **Abstract**

Provided is an inorganic structure (1, 1A) including a plurality of zirconium silicate particles (2); and a binding part (3) that covers a surface of each of the zirconium silicate particles (2) and binds the zirconium silicate particles (2) together. The binding part (3) contains an amorphous compound containing silicon, a metallic element other than silicon, and oxygen, and contains substantially no alkali metal, B, V, Te, P, Bi, Pb and Zn. Also provided is a method for producing an inorganic structure (1, 1A) including: a step for obtaining a mixture by mixing a plurality of zirconium silicate particles (11), a plurality of amorphous silicon dioxide particles (12), and an aqueous solution (13) containing a metallic element other than silicon; and a step for pressurizing and heating the mixture under conditions of a pressure of 10 to 600 MPa and a temperature of 50 to 300 °C.

## Description

### TECHNICAL FIELD

The present invention relates to an inorganic structure and a method for producing the inorganic structure.

### BACKGROUND ART

A sintering method is a known method for producing inorganic structures made from ceramics. The sintering method is a method for obtaining a sintered body by heating an aggregate of a solid powder made from an inorganic substance at a temperature lower than the melting point.

Patent Literature 1 discloses a method for producing a polycrystalline body including a polycrystalline zircon phase of about 45 to about 95 wt% and a polycrystalline cordierite phase of about 5 to about 55 wt%. Specifically, a mixture made from zircon and/or ZrO₂, Al₂O₃, MgO, SiO₂, and a nucleating agent is prepared, the above mixture is made as a compact, the compact is sintered in a range of about 1290 to about 1550 °C to form a sintered body, the sintered body is nucleated and annealed at a temperature of about 600 to about 800 °C, and the obtained nucleator is subjected to a process of crystallization annealing at a temperature from about 1200 °C to below the temperature at which the liquid phase is formed in the nucleator.

### CITATION LIST

### PATENT LITERATURE

Patent Literature 1: Japanese Unexamined Patent Application Publication No. s61-158863

### SUMMARY OF THE INVENTION

However, in the sintering method, energy consumption during manufacturing is large and costly because the solid powder needs to be heated at a high temperature. In addition, if only a solid powder is compacted under low temperature conditions, particles of the solid powder are not sufficiently bound to each other, and thus, the obtained compact has many pores and lacks mechanical strength.

The present invention has been made in consideration of the above issue, which is inherent in the related art. An object of the present invention is to provide an inorganic structure that is prepared through a simple method and has a higher density, and a method for producing the inorganic structure.

In response to the above issue, an inorganic structure according to a first aspect of the present invention includes a plurality of zirconium silicate particles, and a binding part that covers a surface of each of the zirconium silicate particles and binds the zirconium silicate particles together. The binding part contains an amorphous compound containing silicon, a metallic element other than silicon, and oxygen, and contains substantially no alkali metal, B, V, Te, P, Bi, Pb, and Zn.

A method for producing an inorganic structure according to a second aspect of the present invention includes a step for obtaining a mixture by mixing a plurality of zirconium silicate particles, a plurality of amorphous silicon dioxide particles, and an aqueous solution containing a metallic element other than silicon, and a step for pressurizing and heating the mixture under conditions of a pressure of 10 to 600 MPa and a temperature of 50 to 300 °C.

### BRIEF DESCRIPTION OF DRAWINGS

[Fig. 1] Fig. 1 is a schematic cross-sectional view of an example of an inorganic structure according to the present embodiment.
[Fig. 2] Fig. 2 is a schematic cross-sectional view of another example of the inorganic structure according to the present embodiment.
[Fig. 3] Fig. 3 is a schematic cross-sectional view for illustrating a method for producing the inorganic structure according to the present embodiment.
[Fig. 4] Fig. 4 is a graph illustrating an XRD pattern of zircon registered in ICSD, XRD patterns of a test sample 2 and a test sample 3 in a reference example, and an XRD pattern of a sample holder.
[Fig. 5] Fig. 5(a) is a scanning electron microscope image of a test sample 1 of an example, magnified 2,000 times. Fig. 5(b) is a scanning electron microscope image of the test sample 1 magnified 10,000 times. Fig. 5(c) is a scanning electron microscope image of zircon powder magnified 2,000 times. Fig. 5(d) is a scanning electron microscope image of zircon powder magnified 10,000 times.
[Fig. 6] Fig. 6(a) is a diagram illustrating a reflected electron image at position 1 in a test sample 1 of the example. Fig. 6(b) is a diagram illustrating a reflected electron image at position 2 in the test sample 1. Fig. 6(c) is a diagram illustrating a reflected electron image at position 3 in the test sample 1.
[Fig. 7] Fig. 7(a) is a diagram illustrating binarized data of the reflected electron image at position 1 in the test sample 1 of the example. Fig. 7(b) is a diagram illustrating binarized data of the reflected electron image at position 2 in the test sample 1. Fig. 7(c) is a diagram illustrating the binarized data of the reflected electron image at position 3 in the test sample 1.

### DESCRIPTION OF EMBODIMENTS

Referring to the drawings, a detailed description is given below of an inorganic structure and a method for producing the inorganic structure. Note that dimensional ratios in the drawings are exaggerated for convenience of explanation and are sometimes different from actual ratios.

### [Inorganic structure]

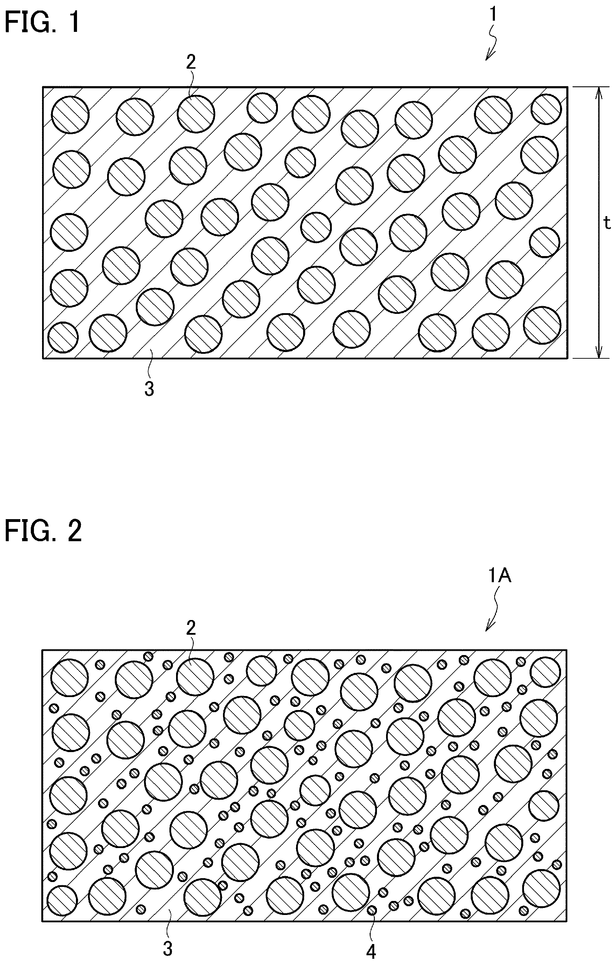

As illustrated in Fig. 1, an inorganic structure 1 according to the present embodiment includes multiple zirconium silicate particles 2. Adjacent zirconium silicate particles 2 are bound to each other through a binding part 3 to form the inorganic structure 1, which is an aggregate of the zirconium silicate particles 2.

The zirconium silicate particles 2 contain zirconium silicate (Zircon, ZrSiO₄) as a main component. That is, the zirconium silicate particles 2 preferably contain zirconium silicate at 50 mol% or more, more preferably 80 mol% or more, particularly preferably 90 mol% or more.

The zirconium silicate particles 2 are preferably crystalline. Since the zirconium silicate particles 2 are crystalline particles, it is possible to obtain the inorganic structure 1 with higher durability compared to the case of amorphous particles. Note that the zirconium silicate particles 2 may be single crystal particles or polycrystalline particles.

The average particle size of the zirconium silicate particles 2 making up the inorganic structure 1 is not limited. However, the average particle size of the zirconium silicate particles 2 is preferably 300 nm or more and 50 µm or less, more preferably 300 nm or more to 30 µm or less, particularly preferably 300 nm or more to 20 µm or less. When the average particle size of the zirconium silicate particles 2 is within these ranges, the zirconium silicate particles 2 are strongly bound each other, which makes it possible to increase the strength of the inorganic structure 1. When the average particle size of the zirconium silicate particles 2 is within these ranges, the percentage of pores present inside the inorganic structure 1 is 20% or less as described below, which makes it possible to increase the strength of the inorganic structure 1. In this description, unless otherwise noted, the "average particle size" is a value calculated as an average of the particle sizes of particles observed in several to tens of visual fields using observation means such as a scanning electron microscope (SEM) or a transmission electron microscope (TEM).

The shape of the zirconium silicate particles 2 is not limited but can be spherical, for example. The zirconium silicate particles 2 may have a whisker shape (needle shape) or a scale shape. Particles having a whisker shape or a scale shape have a higher degree of contact with other particles and with the binding part 3 compared to particles having a spherical shape, which makes it possible to increase the strength of the entire inorganic structure 1.

The inorganic structure 1 according to the present embodiment includes the binding part 3, which binds the multiple zirconium silicate particles 2 together. Since adjacent zirconium silicate particles 2 are bound through the binding part 3, the zirconium silicate particles 2 are bound to each other in three dimensions, and thus it is possible to obtain a bulk body having high mechanical strength.

The binding part 3 contains an amorphous compound containing at least silicon, a metallic element other than silicon, and oxygen. As described below, it is possible to obtain the inorganic structure 1 by heating and pressurizing a mixture obtained by mixing zirconium silicate particles, amorphous silicon dioxide particles, and an aqueous solution containing a metallic element other than silicon. At this time, the silicon dioxide particles react with the aqueous solution to form an amorphous compound containing silicon, a metallic element, and oxygen. Thus, the binding part 3 contains an amorphous compound containing at least silicon, a metallic element other than silicon, and oxygen.

Note that it is preferable that the binding part 3 contain an amorphous compound as a main component. Specifically, the binding part 3 preferably contains the amorphous compound at 50 mol% or more, more preferably 70 mol% or more, even more preferably 90 mol% or more.

The metallic element other than silicon contained in the amorphous compound of the binding part 3 can be at least one selected from the group consisting of an alkali metal, an alkaline earth metal, a transition metal, a base metal, and a semimetal. Note that in this description, the alkaline earth metal includes beryllium and magnesium in addition to calcium, strontium, barium, and radium. The base metal includes aluminum, zinc, gallium, cadmium, indium, tin, mercury, thallium, lead, bismuth, and polonium. The semimetal includes boron, silicon, germanium, arsenic, antimony, and tellurium.

In the amorphous compound in the binding part 3, the metallic element other than silicon is preferably zirconium. As described below, it is possible to obtain the inorganic structure 1 by heating and pressurizing a mixture obtained by mixing zirconium silicate particles, amorphous silicon dioxide particles, and an aqueous solution containing zirconium. Here, the silicon dioxide particles react with the aqueous solution containing zirconium to form an amorphous compound containing silicon, oxygen, and zirconium. Thus, the binding part 3 preferably contains an amorphous compound containing silicon, oxygen, and zirconium.

Note that it is preferable that the binding part 3 contain substantially no alkali metal, B, V, Te, P, Bi, Pb, and Zn. It is preferable that the binding part 3 contain substantially no Ca, Sr, and Ba. In this description, "the binding part contains substantially no alkali metal, B, V, Te, P, Bi, Pb, and Zn" means that the binding part 3 is not made to contain an alkali metal, B, V, Te, P, Bi, Pb, and Zn on purpose. Thus, when one or more of an alkali metal, B, V, Te, P, Bi, Pb, and Zn are mixed as unavoidable impurities in the binding part 3, the condition in which "the binding part contains substantially no alkali metal, B, V, Te, P, Bi, Pb, and Zn" is satisfied. In a similar manner, in this description, "the binding part contains substantially no Ca, Sr, and Ba" means that the binding part 3 is not made to contain Ca, Sr, and Ba on purpose. Thus, when one or more of Ca, Sr, and Ba are mixed as inevitable impurities in the binding part 3, the condition in which "the binding part contains substantially no Ca, Sr, and Ba" is satisfied.

The binding part 3 is preferably in direct contact with the zirconium silicate particles 2. It is preferable that the binding part 3 cover at least a part of the surface of each of the zirconium silicate particles 2, and it is more preferable that the binding part 3 cover the entire surface of each of the zirconium silicate particles 2. Thus, the zirconium silicate particles 2 and the binding part 3 are firmly bound, and thus it is possible to obtain the inorganic structure 1 having excellent density and mechanical strength.

As illustrated in Fig. 2, in an inorganic structure 1A, the binding part 3 may include fine particles 4 having an average particle size of 100 nm or less. Since the binding part 3 includes multiple fine particles 4, the binding part 3 has a denser structure, and thus it is possible to increase the strength of the inorganic structure 1A.

As described above, the binding part 3 is formed through a reaction of amorphous silicon dioxide particles with an aqueous solution containing a metallic element other than silicon due to heating and pressurization. Thus, particulate matter derived from the silicon dioxide particles may be included inside the binding part 3. As described below, the particle size of the amorphous silicon dioxide particles is preferably 100 nm or less. Thus, the binding part 3 may include the fine particles 4 derived from the silicon dioxide particles and having an average particle size of 100 nm or less. Note that the particle size of the fine particles 4 included in the binding part 3 can be measured using a scanning electron microscope or a transmission electron microscope.

The fine particles 4 included in the binding part 3 may be particles made from an amorphous compound containing silicon, oxygen, and a metallic element other than silicon. The fine particles 4 may be particles made from a crystalline compound containing silicon, oxygen, and a metallic element other than silicon. The fine particles 4 included in the binding part 3 may be particles made from an amorphous compound containing silicon, oxygen, and zirconium. The fine particles 4 may be particles made from a crystalline compound containing silicon, oxygen, and zirconium. Note that the fine particles 4 may contain silicon dioxide that did not react with an aqueous solution containing a metallic element other than silicon.

It is preferable that the volume ratio of the zirconium silicate particles 2 be larger than that of the binding part 3 in the inorganic structure 1, 1A. Here, the obtained inorganic structure 1, 1A is likely to utilize properties of the zirconium silicate particles 2. Specifically, the zirconium silicate particles 2 have a low thermal conductivity of about 1.3 W/m·K and have excellent thermal insulation. Thus, by making the volume ratio of the zirconium silicate particles 2 larger than that of the binding part 3, it is possible to improve the thermal insulation of the entire inorganic structure 1, 1A.

The binding part 3 preferably further contains crystalline zirconium silicate. As described above, the binding part 3 contains an amorphous compound containing silicon and oxygen and more preferably contains an amorphous compound containing silicon, oxygen, and zirconium. Thus, the crystal structure of the binding part 3 is at least partially amorphous. However, it is preferable that the binding part 3 contain crystalline zirconium silicate in addition to the amorphous compound. Further inclusion of crystalline zirconium silicate in the binding part 3 makes it possible to enhance the chemical stability of the inorganic structure 1, 1A compared to the case where the binding part 3 is made from only the amorphous compound.

As described above, in the inorganic structure 1, 1A, the binding part 3 preferably contains an amorphous compound containing silicon, oxygen, and zirconium. Note that in the amorphous compound, the ratio of silicon to zirconium is not limited. When the binding part 3 includes the fine particles 4, the fine particles 4 may be particles made from the amorphous compound containing silicon, oxygen, and zirconium, or particles made from crystalline zirconium silicate. The fine particles 4 may contain silica derived from silicon dioxide particles, which are the raw material. The binding part 3 may contain zirconium silicate as a crystalline compound.

As described above, the binding part 3 is formed through the reaction of amorphous silicon dioxide particles with an aqueous solution containing a metallic element other than silicon due to heating and pressurization, resulting in a dense phase. Pores may be present in at least one location of inside the binding part 3 or between the binding part 3 and the zirconium silicate particles 2.

The porosity in the cross section of the inorganic structure 1, 1A is preferably 20% or less. That is, when the cross section of the inorganic structure 1, 1A is observed, the average value of the percentage of pores per unit area is preferably 20% or less. When the porosity is 20% or less, the proportion of the inorganic structure 1, 1A in which the zirconium silicate particles 2 are bound to each other by the binding part 3 increases, and thus the inorganic structure 1, 1A become denser and has increased strength. This makes it possible to improve the machinability of the inorganic structure 1, 1A. When the porosity is 20% or less, the occurrence of cracks starting from pores in the inorganic structure 1, 1A is prevented, and thus it is possible to increase the bending strength of the inorganic structure 1, 1A. Note that the porosity in the cross section of the inorganic structure 1, 1A is preferably 10% or less, more preferably 8% or less, even more preferably 5% or less. The lower the porosity in the cross section of the inorganic structure 1, 1A, the more cracks starting from pores are prevented, which makes it possible to increase the strength of the inorganic structure 1, 1A.

In this description, the porosity is determined as follows. First, a cross section of the inorganic structure 1, 1A is observed to discriminate among the zirconium silicate particles 2, the binding part 3, and pores. Then, the unit area and the area of the pores in that unit area are measured to obtain the percentage of the pores per unit area, which is defined as the porosity. Note that it is more preferable to obtain the percentage of pores per unit area at multiple points in a cross section of the inorganic structure 1, 1A and then to define the average value of the percentage of the pores per unit are as the porosity. When a cross section of the inorganic structure 1, 1A is observed, an optical microscope, a scanning electron microscope (SEM), and a transmission electron microscope (TEM) are usable. The unit area and the area of pores in that unit area may be measured through binarizing an image observed using a microscope.

The size of pores inside the inorganic structure 1, 1A is not limited but is preferably as small as possible. When the size of pores is small, cracks starting from pores are prevented, which makes it possible to increase the strength of the inorganic structure 1, 1A and to improve the machinability of the inorganic structure 1, 1A. Note that the size of pores in the inorganic structure 1, 1A is preferably 5 µm or less, more preferably 1 µm or less, even more preferably 100 nm or less. The size of pores inside the inorganic structure 1, 1A is determined by observing a cross section of the inorganic structure 1, 1A using a microscope in the same manner as the porosity described above.

It is sufficient for the inorganic structure 1, 1A to have a structure in which the zirconium silicate particles 2 are bound to each other through the binding part 3. Thus, as long as the inorganic structure 1, 1 A has such a structure, its shape is not limited. The inorganic structure 1, 1A can have, for example, a plate shape, a film shape, a rectangular shape, a lumpy shape, a rod shape, or a spherical shape. When the inorganic structure 1, 1A has a plate shape or a film shape, its thickness t is not limited but can be 50 µm or more, for example. The inorganic structure 1, 1A according to the present embodiment is formed by using a pressure heating method as described below. It is thus possible to easily obtain the inorganic structure 1, 1A having a large thickness. Note that the thickness t of the inorganic structure 1, 1A may be 500 µm or more, 1 mm or more, or 1 cm or more. The upper limit of the thickness t for the inorganic structure 1, 1A is not limited but can be 50 cm, for example.

In the inorganic structure 1, 1A, the multiple zirconium silicate particles 2 are bound to each other through the binding part 3 and thus are not bound by an organic binder made from an organic compound, nor by an inorganic binder other than the binding part 3. Thus, the inorganic structure 1, 1A retains the characteristics of the zirconium silicate particles 2 and the binding part 3. For example, the zirconium silicate particles 2 have high thermal insulation properties, and thus the obtained inorganic structure 1, 1A also have excellent thermal insulation properties.

As described above, the inorganic structure 1, 1A according to the present embodiment includes the multiple zirconium silicate particles 2 and the binding part 3 that covers the surface of each of the zirconium silicate particles 2 and binds the zirconium silicate particles 2 together. The binding part 3 contains an amorphous compound containing silicon, a metallic element other than silicon, and oxygen. The binding part 3 contains substantially no alkali metal, B, V, Te, P, Bi, Pb, and Zn. In the inorganic structure 1, 1A, the multiple zirconium silicate particles 2 are bound through the binding part 3 having high density. It is thus possible to obtain the inorganic structure 1, 1A having excellent density and mechanical strength.

Zirconium silicate has a thermal conductivity of about 1.3 W/m-K, which is known to be low among ceramic materials. Thus, using the zirconium silicate particles 2 and making the binding part 3 from an amorphous compound containing silicon, oxygen, and zirconium provides the inorganic structure 1, 1A having excellent thermal insulation in addition to excellent mechanical strength. Note that the inorganic structure 1, 1A preferably has a thermal conductivity of 1 W/m·K or less. Here, it is possible to measure the thermal conductivity according to the Japanese Industrial Standards JIS R1611 (method for measuring thermal diffusivity, specific heat capacity, and thermal conductivity of fine ceramics using a flash method).

As illustrated in Figs. 1 and 2, the inorganic structure 1, 1A according to the present embodiment can be a structure in which only the zirconium silicate particles 2 are bound through the binding part 3. However, as described below, the inorganic structure 1, 1A is obtained by being pressurized while being heated at a temperature of 50 to 300 °C, which makes it possible to add a member having low heat resistance to the inorganic structure 1, 1A. Specifically, the inorganic structure 1, 1A may contain organic matter or resin particles in addition to the zirconium silicate particles 2 and the binding part 3. A member added to the inorganic structure 1, 1A is not limited to one having low heat resistance, such as organic matter, and the inorganic structure 1, 1A may include particles made from an inorganic compound other than the zirconium silicate particles 2 and the binding part 3.

### [Method for producing inorganic structure]

Next, a method for producing the inorganic structure 1, 1A is described. It is possible to produce an inorganic structure by performing a step of mixing multiple zirconium silicate particles, multiple silicon dioxide particles, which are amorphous, and an aqueous solution to obtain a mixture and a step of pressurizing and heating the mixture.

Specifically, the mixture is prepared by first mixing a powder of zirconium silicate particles, silicon dioxide particles, and an aqueous solution. The zirconium silicate particles preferably contain zirconium silicate at 50 mol% or more, more preferably 80 mol% or more, particularly preferably 90 mol% or more.

The silicon dioxide particles are particles made from amorphous silicon dioxide. The silicon dioxide particles are preferably fumed particles, that is, fumed silica. Fumed silica is constituted by amorphous silica particles having a primary particle size of about 5 to 50 nm. The fumed silica is constituted by particles produced through combustion hydrolysis of silicon tetrachloride, and bulky secondary particles are formed through aggregation and agglomeration of primary particles. Thus, the fumed silica is highly reactive with an aqueous solution, and it is possible to easily form an amorphous compound containing silicon and oxygen.

As the aqueous solution, one containing a metallic element other than silicon is used. Note that the aqueous solution containing a metallic element other than silicon is an aqueous solution containing the metallic element as ions. The metallic element other than silicon can be at least one selected from the group consisting of an alkali metal, an alkaline earth metal, a transition metal, a base metal, and a semimetal. A solvent for dissolving the metallic element is preferably pure water or ion-exchanged water. In addition to water, the solvent may contain an acidic or alkaline substance, or an organic solvent, such as alcohol. Note that, hereinafter, "an aqueous solution containing a metallic element other than silicon" is also referred to as "a metallic element-containing aqueous solution".

It is preferable to use an aqueous solution containing zirconium as the aqueous solution. Note that the aqueous solution containing zirconium is an aqueous solution containing zirconium as ions, and for example, a zirconium oxyacetate aqueous solution is usable. Note that hereafter, "an aqueous solution containing zirconium" is also referred to as "a zirconium-containing aqueous solution."

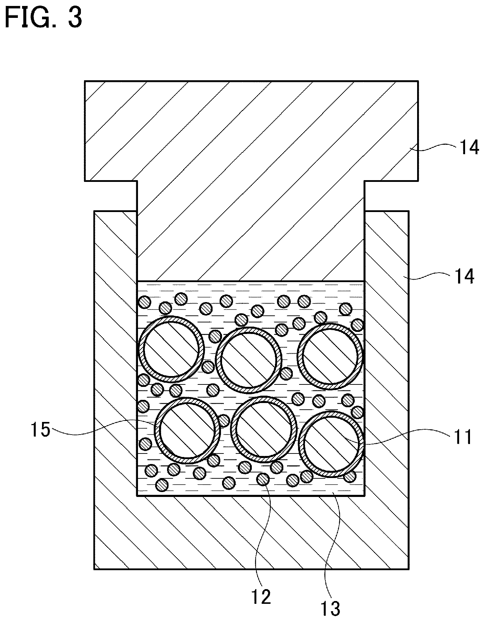

Then, as illustrated in Fig. 3, the mixture obtained by mixing zirconium silicate particles 11, silicon dioxide particles 12, and a metallic element-containing aqueous solution 13 is filled inside a die 14. After being filled with the mixture, the die 14 is heated as necessary. Then, applying pressure to the mixture inside the die 14 causes the inside of the die 14 to be a high-pressure state. At this time, since the silicon dioxide particles 12 are amorphous and highly reactive, the silicon dioxide particles 12 and the metallic element-containing aqueous solution 13 react to form the binding part 3 containing silicon, oxygen, and a metallic element other than silicon.

Here, when fumed silica is used as the silicon dioxide particles 12, the particle size of the fumed silica is at the nano-level, and thus the particles are filled without gaps among the zirconium silicate particles 11. Thus, the obtained binding part 3 has a dense structure and enables the zirconium silicate particles 11 to be tightly bound to each other.

When a zirconium-containing aqueous solution is used as the aqueous solution, both the zirconium silicate particles 11 and the zirconium-containing aqueous solution contain zirconium, which makes it easier for the zirconium to diffuse into each other. This facilitates the formation of a compound 15 containing silicon, oxygen, and zirconium, such as zirconium silicate, on the surface of each of the zirconium silicate particles 11, as illustrated in Fig. 3. Thus, the obtained binding part 3 tightly binds the zirconium silicate particles 11 while covering them, making it possible to increase the mechanical strength of the inorganic structure 1, 1A.

Then, taking out the molded body from the inside of the die provides the inorganic structure 1, 1A in which the multiple zirconium silicate particles 2 are bound to each other through the binding part 3.

Note that the heating and pressurizing conditions for the mixture obtained by mixing the zirconium silicate particles 11, the silicon dioxide particles 12, and the metallic element-containing aqueous solution 13 are not limited as long as the reaction of the silicon dioxide particles 12 with the metallic element-containing aqueous solution 13 proceeds. For example, it is preferable to pressurize the above-described mixture at a pressure of 10 to 600 MPa while heating at a temperature of 50 to 300 °C. Note that the temperature for heating the mixture is more preferably 80 to 250 °C, more preferably 100 to 200 °C. The pressure for pressurizing the mixture is more preferably 50 to 600 MPa, even more preferably 200 to 600 MPa.

Through the heating and pressurizing step described above, the amorphous silicon dioxide particles 12 may completely react with the metallic element-containing aqueous solution 13 to form a compound containing silicon, oxygen, and zirconium. The silicon dioxide particles 12 may not completely react with the metallic element-containing aqueous solution 13 to remain as silicon dioxide in the binding part 3.

Since the binding part 3 is formed through the reaction of the silicon dioxide particles 12 with the metallic element-containing aqueous solution 13, the binding part 3 may include the fine particles 4 derived from the silicon dioxide particles and having an average particle size of 100 nm or less. Note that the fine particles 4 may contain silicon dioxide that did not react with the metallic element-containing aqueous solution 13.

As described above, it is possible to obtain the inorganic structure 1, 1A by pressurizing and heating the mixture obtained by mixing the zirconium silicate particles 11, the silicon dioxide particles 12, and the metallic element-containing aqueous solution 13 at a pressure of 10 to 600 MPa and at a temperature of 50 to 300 °C. Through such a heating and pressurizing step, it is possible to form the binding part 3 containing an amorphous compound. By increasing the heating and pressurizing time of the above-described mixture, a part of the amorphous compound crystallizes. Thus, for example, when the binding part 3 is made to further contain crystalline zirconium silicate, it is preferable to lengthen the heating and pressurizing time of the mixture of the zirconium silicate particles, the silicon dioxide particles, and the zirconium-containing aqueous solution.

In the producing method according to the present embodiment, as the amorphous silicon dioxide particles, it is preferable to use fumed particles, that is, fumed silica. Here, alumina (Al₂O₃) and titania (TiO₂) are also present as fumed particles. Thus, at least one of fumed alumina or fumed titania may be further mixed into the mixture obtained by mixing the zirconium silicate particles 11, the silicon dioxide particles 12, and the metallic element-containing aqueous solution 13. This causes the fumed alumina and/or the fumed titania to react with the metallic element-containing aqueous solution 13 and enables the reaction product to be included in the binding part 3.

Here, a possible method for forming an aggregate of zirconium silicate particles is to press only powder of zirconium silicate particles. However, even if the powder of zirconium silicate particles is put into a die and pressurized at normal temperature, the zirconium silicate particles are unlikely to react with each other, and it is difficult to firmly bind the particles together. Thus, the obtained compact has many pores and lacks mechanical strength.

Another possible method for forming an aggregate of zirconium silicate particles is to press only powder of the zirconium silicate particles to form a compact and then to calcine the compact at a high temperature (for example, 1700 °C or higher). When a compact of zirconium silicate particles is calcined at a high temperature, the zirconium silicate particles are sintered together to form a structure. However, even when the compact of zirconium silicate particles is calcined at a high temperature, the zirconium silicate particles are unlikely to sinter with each other, and thus the obtained structure has many pores and lacks mechanical strength. When zirconium silicate particles are calcined at a high temperature, a precise temperature control is necessary, which increases the manufacturing cost.

In contrast, in the producing method according to the present embodiment, a mixture obtained by mixing the zirconium silicate particles 11, the amorphous silicon dioxide particles 12, and the metallic element-containing aqueous solution 13 is heated and pressurized, and thus it is possible to obtain a dense and strong structure. In the producing method according to the present embodiment, the structure is obtained by being pressurized while being heated at the temperature of 50 to 300 °C, which makes it possible to eliminate precise temperature control and to reduce the manufacturing cost.

As described above, the method for producing the inorganic structure 1, 1A according to the present embodiment includes a step of obtaining a mixture by mixing the multiple zirconium silicate particles 11, the multiple silicon dioxide particles 12, which are amorphous, and the aqueous solution 13 containing a metallic element other than silicon. The producing method further includes a step of pressurizing and heating the mixture under conditions of a pressure of 10 to 600 MPa and a temperature of 50 to 300 °C. Thus, the producing method according to the present embodiment makes it possible to produce an inorganic structure having high density through a simple method.

### [Member provided with inorganic structure]

Next, a member provided with the inorganic structure 1 is described. As described above, the inorganic structure 1 is formable into a plate shape having a large thickness and also has excellent stability as it is dense. The inorganic structure 1 has high mechanical strength, and thus can be cut in the same manner as a general ceramic member and can undergo a surface treatment. Thus, the inorganic structure 1 can be suitably used as a building material. The building material is not limited, and possible examples include an exterior wall material (siding), a roof material, and the like. Road materials and outer groove materials are also possible examples of the building material.

It is also possible to suitably use the inorganic structure 1 as an electronic equipment material. Possible examples of the electronic equipment material include structural materials, heat-resistant materials, insulating materials, heat insulating materials, sealing materials, circuit boards, and optical materials.

### EXAMPLES

The present embodiment is described below in more detail with reference to examples and reference examples, but the present embodiment is not limited to these examples.

### [Preparation of test samples]

### (Examples)

First, zircon powder (zirconium silicate powder (ZrSiO₄), manufactured by FUJIFILM Wako Pure Chemical Corporation) and amorphous silica powder (fumed silica, AEROSIL (registered trademark) manufactured by NIPPON AEROSIL CO., LTD.) were prepared. Then, an amount of 0.5 g of the zircon powder and an amount of 0.1778 g of the silica powder were mixed with acetone using an agate mortar and an agate pestle to obtain a mixed power. Note that in this mixed powder, the volume ratio (vol%) of the zircon powder to the silica powder was 57 : 43 (ZrSiO₄ : SiO₂).

An amount of 2 g of zirconium oxyacetate powder ((ZrO(CH₃COO)₂, manufactured by Mitsuwa Chemical Co., Ltd) was dissolved in an amount of 3 ml of ion-exchanged water to obtain a zirconium oxyacetate aqueous solution.

Next, the entire amount of the mixed powder was put in a cylindrical die (ϕ10 mm) for molding having an internal space. Then, an amount of 400 µl of the zirconium oxyacetate aqueous solution was added in the die for molding and was mixed using a plastic spatula. Note that in the mixed powder containing the zirconium oxyacetate aqueous solution, SiO₂ was 250 mol% relative to Zr (CH₃COO)₂.

The mixed powder containing the zirconium oxyacetate aqueous solution was then heated and pressurized under conditions of 150 °C, 400 MPa, and 60 minutes. Thus, a test sample 1 according to the present example, which is cylindrical, was obtained.

### (Reference example)

Test samples without zircon powder were prepared to confirm crystal structures. First, an amount of 0.2 g of the same silica powder as in the example was put in a cylindrical die (ϕ10 mm) having an internal space. Then, an amount of 300 µl of the zirconium oxyacetate aqueous solution prepared in the example was added in the die and was mixed using a plastic spatula.

Then, the silica powder containing the zirconium oxyacetate aqueous solution was heated and pressurized under conditions of 150 °C, 400 MPa, and 60 minutes, and a test sample 2 containing no zirconium powder was obtained. The silica powder containing the zirconium oxyacetate aqueous solution was heated and pressurized under conditions of 150 °C, 400 MPa, and 240 minutes, and a test sample 3 containing no zircon powder was obtained.

The test sample 2, which was prepared with a heating and pressurizing time of 60 minutes, was prepared under the same conditions as the test sample 1 of the example except that it did not contain zircon powder. Thus, the test sample 2 of the reference example is considered to have the same crystal structure as the compound containing silicon (silicon-containing compound) of the test sample 1 of the example. It is considered that the test sample 3 without zircon powder, which was prepared with a heating and pressurizing time of 240 minutes, has the same crystal structure as the silicon-containing compound of the test sample 1 of the example with a heating and pressurizing time of 240 minutes.

### [Evaluation of test samples]

### (Crystal structure analysis)

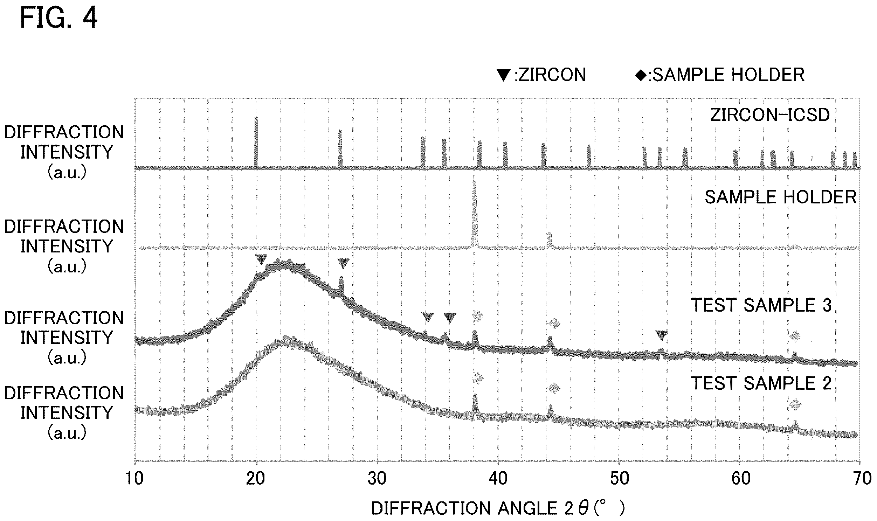

A powder X-ray diffraction (XRD) instrument was used to measure XRD patterns of powders obtained by pulverizing the test sample 2 and the test sample 3. Fig. 4 illustrates an XRD pattern of zircon registered in ICSD, XRD patterns of the test sample 2 and the test sample 3 without zircon powder, and an XRD pattern of a sample holder.

As illustrated in Fig. 4, the silicon-containing compound contained in the test sample 1 of the example is considered to be amorphous because the test sample 2 with a heating and pressurizing time of 60 minutes did not indicate crystalline peaks. That is, the silicon-containing compound that makes up the binding part 3 in the test sample 1 is considered to be amorphous. In contrast, in the case of the test sample 3 with a heating and pressurizing time of 240 minutes, it is considered that the silicon-containing compound is made from crystalline zircon and an amorphous compound because it includes zircon peaks. That is, when the heating and pressurizing time of the test sample 1 is 240 minutes, the silicon-containing compound making up the binding part 3 is considered to be made from crystalline zircon and an amorphous compound.

### (Structure observation)

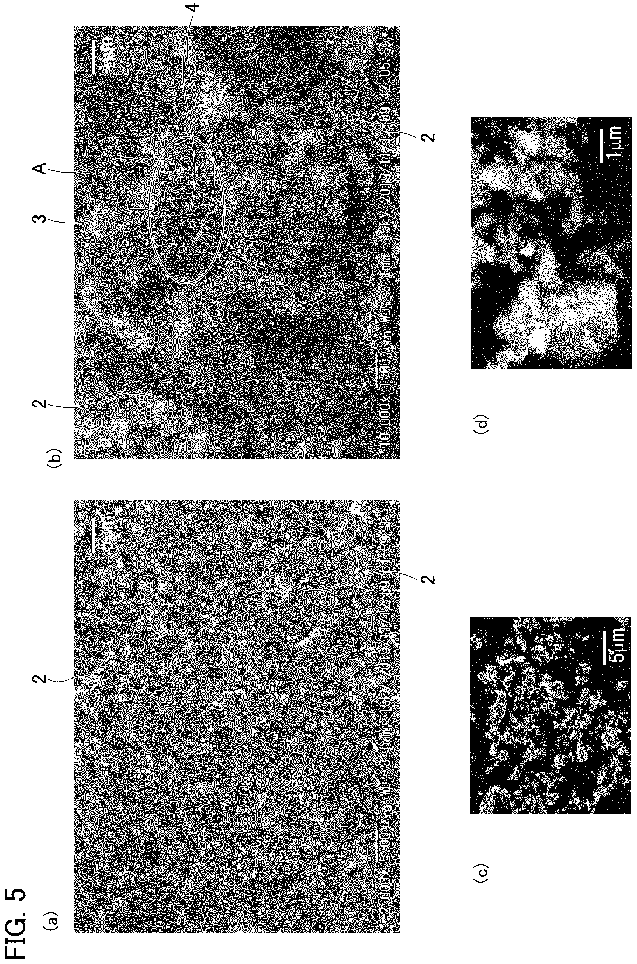

The cross section of the cut cylindrical test sample 1 prepared in the example was observed using a scanning electron microscope (SEM). Note that the observation surface of the test sample 1 was sputtered with gold. Fig. 5(a) illustrates an SEM image of the test sample 1 magnified 2,000 times, and Fig. 5(b) illustrates an SEM image of the test sample 1 magnified 10,000 times. For reference, Fig. 5(c) illustrates an SEM image of zircon powder magnified 2,000 times, and Fig. 5(d) illustrates an SEM image of zircon powder magnified 10,000 times.

From the SEM image in Fig. 5(a), it can be confirmed that particles of the zircon powder (zirconium silicate particles 2) are bound to each other through the binding part 3 in the test sample 1 of the example. A dense structure can be confirmed in the test sample 1. As indicated by the symbol A in Fig. 5(b), it can be confirmed that fine particles 4 with a particle size of 100 nm or less are included inside the binding part 3.

### (Porosity measurement)

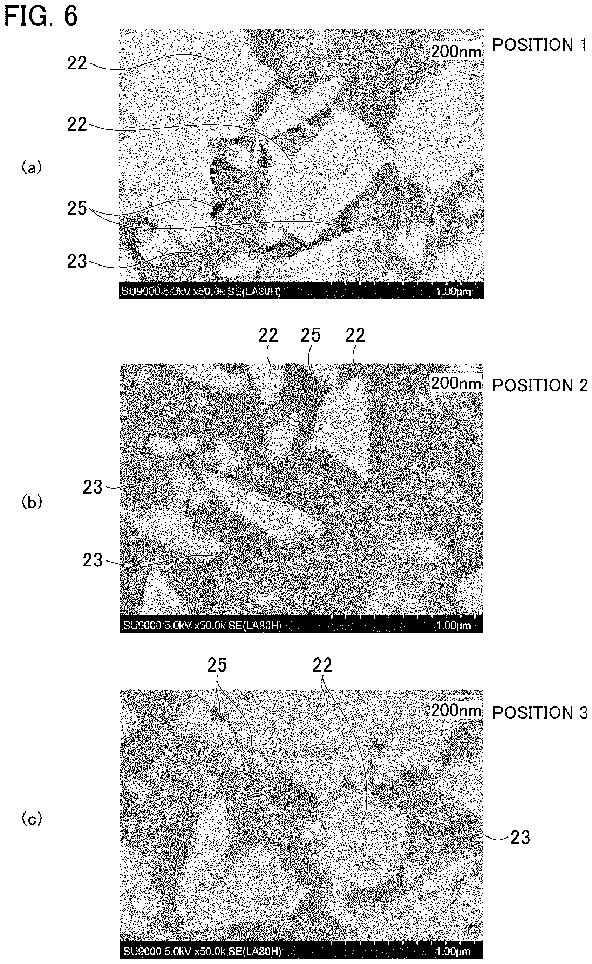

First, cross section polisher processing (CP processing) was applied to the cross section of the test sample 1 of the example, which is cylindrical. Then, using a scanning electron microscope (SEM), a reflected electron image was observed at a magnification of 50,000 times on the cross section of the test sample 1. Figs. 6(a), 6(b), and 6(c) illustrate reflected electron images obtained by observing three points (positions 1 to 3) in the cross section of the test sample 1. In the observed reflected electron images, a white part 22 is zircon, a gray part 23 is a silicon-containing compound, and black parts 25 are pores.

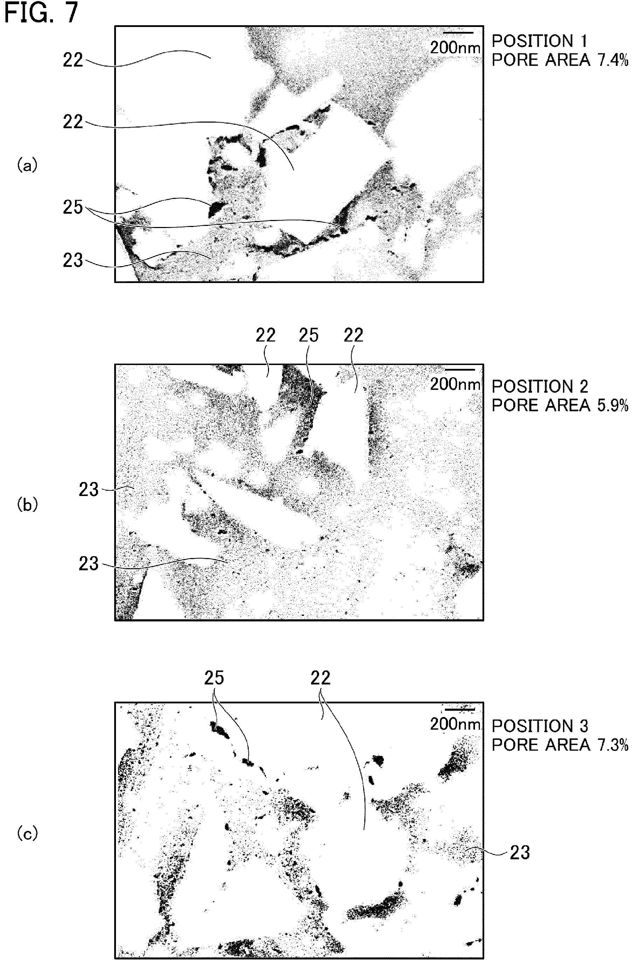

Next, through binarizing the SEM images of the three fields, the pore portions were clarified. The binarized images of the reflected electron images of Figs. 6(a), 6(b), and 6(c) are illustrated in Figs. 7(a), 7(b), and 7(c), respectively. Then, the area percentage of the pore portion was calculated from the binarized image, and the average value was taken as the porosity. Specifically, in Fig. 7(a), the area percentage of the pore portion at position 1 was 7.4%. In Fig. 7(b), the area percentage of the pore portion at position 2 was 5.9%. In Fig. 7(c), the area percentage of the pore at position 3 was 7.3%. Thus, the porosity of the test sample 1 prepared this time was 6.8%, which is the average value of the area percentage of the pore portion at positions 1 to 3.

Although the present embodiment has been described above, the present embodiment is not limited to these descriptions, and various modifications are possible within the scope of the gist according to the present embodiment.

The entire contents of Japanese Patent Application No. 2020-092453 (filed May 27, 2020) are incorporated herein by reference.

### INDUSTRIAL APPLICABILITY

The present disclosure makes it possible to provide an inorganic structure that can be prepared through a simple method and has even higher density, and a method for producing the inorganic structure.

### REFERENCE SIGNS LIST

1, 1A Inorganic structure
2 Zirconium silicate particles
3 Binding part
4 Fine particles
11 Zirconium silicate particles
12 Silicon dioxide particles
13 Aqueous solution containing a metallic element other than silicon

## Claims

1. An inorganic structure, comprising:
a plurality of zirconium silicate particles; and
a binding part that covers a surface of each of the zirconium silicate particles and binds the zirconium silicate particles together, wherein
the binding part contains an amorphous compound containing silicon, a metallic element other than silicon, and oxygen, and contains substantially no alkali metal, B, V, Te, P, Bi, Pb, and Zn.

2. The inorganic structure according to claim 1, wherein the binding part includes fine particles having an average particle size of 100 nm or less.

3. The inorganic structure according to claim 1 or 2, wherein the binding part contains substantially no Ca, Sr, and Ba.

4. The inorganic structure according to any one of claims 1 to 3, wherein the metallic element other than silicon is zirconium.

5. The inorganic structure according to any one of claims 1 to 4, wherein the zirconium silicate particles have a volume ratio greater than that of the binding part.

6. The inorganic structure according to any one of claims 1 to 5, wherein the binding part further contains crystalline zirconium silicate.

7. The inorganic structure according to any one of claims 1 to 6, wherein the inorganic structure has a porosity of 20% or less.

8. The inorganic structure according to any one of claims 1 to 7, wherein the zirconium silicate particles are crystalline.

9. The inorganic structure according to any one of claims 1 to 8, wherein the inorganic structure has a thermal conductivity of 1 W/m K or less.

10. The inorganic structure according to any one of claims 1 to 9, wherein the inorganic structure has a thickness of 500 µm or more.

11. A method for producing an inorganic structure, comprising:
a step for obtaining a mixture by mixing a plurality of zirconium silicate particles, a plurality of amorphous silicon dioxide particles, and an aqueous solution containing a metallic element other than silicon; and
a step for pressurizing and heating the mixture under conditions of a pressure of 10 to 600 MPa and a temperature of 50 to 300 °C.
